# EUROPÄISCHE PATENTSCHRIFT

(11) **EP 0 677 348 B1**
(45) Veröffentlichungstag und Bekanntmachung des Hinweises auf die Patenterteilung: **27.08.1997**
(21) Anmeldenummer: 94120658.3
(22) Anmeldetag: 24.12.1994
(51) Int. Cl.: B23B 31/12

(54) **Bohrfutter**
Chuck
Mandrin de perçage

(30) Priorität: 09.03.1994 DE 4407854
(43) Veröffentlichungstag der Anmeldung: 18.10.1995
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- DE-C- 4 238 503
- DE-C- 4 313 742

## Beschreibung

Die Erfindung betrifft ein Bohrfutter mit einem an eine Bohrspindel anschließbaren Futterkörper, mit zwischen sich eine Aufnahme für das Bohrwerkzeug bildenden Spannbacken, die zum Öffnen und Schließen des Bohrfutters durch einen am Futterkörper drehbar geführten Spannring verstellbar sind, ferner mit einer Sperreinrichtung für den Spannring, bestehend aus einem koaxialen Kranz von Sperrausnehmungen am Spannring und aus mindestens einem, an einem axialen Sperring angeordneten Sperrglied, das im wesentlichen radial von innen nach außen in die Sperrausnehmungen einrückbar ist, wobei im eingerückten Zustand das Sperrglied und die Sperrausnehmungen einander in derart geneigten Flankenflächen anliegen, daß diese den Spannring in der dem Öffnen des Bohrfutters entsprechenden Drehrichtung gegen Verdrehen sperren, beim Verdrehen des Spannrings in der entgegengesetzten, also dem Schließen des Bohrfutters entsprechenden Drehrichtung aber das Sperrglied federnd aus den Sperrausnehmungen hinausdrücken und dadurch von Sperrausnehmung zu Sperrausnehmung verrutschen lassen, und mit einem mit dem Futterkörper koaxialen Stellring, der zwischen Anschlägen relativ zum Futterkörper in beiden Drehrichtungen begrenzt verdrehbar ist und ein am Sperrglied angreifendes Stellglied aufweist, so daß durch Verdrehen des Stellrings in der dem Schließen des Bohrfutters entsprechenden Drehrichtung des Spannrings das Sperrglied sich aus dem eingerückten Zustand in den ausgerückten Zustand und umgekehrt verstellt, wobei das Sperrglied als ein sich in Umfangsrichtung erstreckender, mit einem seiner beiden Enden am Sperring gehaltener Arm ausgebildet ist, der mit Sperrzähnen versehen und im eingerückten Zustand durch das Stellglied mit den Sperrzähnen in die Sperrausnehmungen gedrückt ist.

Derartige Bohrfutter sind in der nicht zum vorveröffentlichten Stand der Technik gehörenden Patentanmeldung P 43 13 742.3 beschrieben und besitzen die Eigenschaft, daß bei der Handhabung des Bohrfutters der Futterkörper durch den von Hand festgehaltenen Stellring gegen ein Mitdrehen gesichert wird, wenn mit der jeweils anderen Hand der Spannring zum Öffnen und Schließen des Bohrfutters verdreht wird. Die dabei die Drehbegrenzung des Stellrings am Futterkörper bewirkenden Anschläge können auch hohe Drehmomente aufnehmen, so daß zum Spannen und Lösen des Bohrfutters der Spannring gegenüber dem Stellring und damit gegenüber dem Futterkörper mit aller von Hand aufbringbaren Kraft verdreht werden kann. Da das Sperrglied beim Schließen des Bohrfutters diese Verdrehung nicht behindert, führt das von Hand ausgeübte Drehmoment ungeschmälert zu einer entsprechend festen Einspannung des Bohrwerkzeugs zwischen den Spannbacken. Im übrigen besteht bei entsprechender weiterer Ausbildung des Bohrfutter die Möglichkeit, die Spannbacken durch eine Nachstellfeder nachstellen zu lassen, wenn sich während des Bohrbetriebs die Spannbacken in den Bohrerschaft eingraben sollten und sich dadurch die Bohrereinspannung lockern sollte. Wird umgekehrt zum Lösen und Öffnen des Bohrfutters der Spannring im entsprechenden Drehsinn gegenüber dem festgehaltenen Stellring verdreht, wird zunächst automatisch das Sperrglied in den den Spannring freigebenden Zustand verstellt, so daß dann der Spannring gegenüber dem wieder durch den festgehaltenen Stellring am Mitdrehen gehinderten Futterkörper frei und nach Belieben verdreht werden kann. - Von Bedeutung ist dabei, daß sich das Sperrglied während des Bohrbetriebs nicht, und zwar auch selbst nur vorübergehend nicht ungewollt in den an den Sperrausnehmungen ausgerückten Zustand verstellen darf, weil dann unmittelbar die Gefahr entsteht, daß sich der Spannring im Sinne eines Öffnens des Bohrfutters selbsttätig verdreht und sich im Ergebnis die Einspannung des Bohrers lockert oder sogar vollständig löst. Bei den bekannten Bohrfuttern ist diese Gefahr nicht vollständig auszuschließen. Der das Sperrglied bildende Arm trägt die Sperrzähne an seinem freien Ende und das Stellglied greift am Arm im wesentlichen im Bereich des anderen Armendes an. Daher besteht auch im eingerückten Zustand des Sperrglieds die Gefahr, daß das freie Ende des Arms unter den im Bohrbetrieb unvermeidlichen dynamischen Belastungen des Bohrfutters zu unkontrollierbaren Schwingungsbewegungen angeregt wird und dabei die Sperrzähne vorübergehend aus den Sperrausnehmungen herausspringen.

Der Erfindung liegt die Aufgabe zugrunde, ein Bohrfutter der eingangs genannten Art so auszubilden, daß die Sperrfunktion des Sperrglieds im an den Sperrausnehmungen eingerückten Zustand sicher und zuverlässig gewährleistet ist.

Diese Aufgabe wird nach der Erfindung dadurch gelöst, daß das Stellglied im eingerückten Zustand des Sperrglieds am freien Ende des Arms anliegt und dieses radial gegen den Kranz der Sperrausnehmungen drückt, daß ferner der Arm im mittleren Bereich zwischen dem am Sperring gehaltenen Ende und dem am Stellglied anliegenden Ende radial nach innen soweit elastisch durchbiegbar ist, wie im eingerückten Zustand die Sperrzähne radial auswärts in die Sperrausnehmungen eingreifen, und daß sich die Sperrzähne nur in diesem mittleren Bereich des Armes befinden.

Durch das im eingerückten Zustand des Sperrglieds am freien Armende anliegende Stellglied, das darüberhinaus das freie Armende auch noch radial nach außen gegen den Kranz der Sperrausnehmungen drückt, ist das freie Armende zwischen dem Kranz der Sperrausnehmungen einerseits und dem Stellglied andererseits formschlüssig eingeschlossen und besitzt somit keine Bewegungsmöglichkeiten mehr. Damit sind im eingerückten Zustand des Sperrglieds Bewegungen des Armes insgesamt, welche die Sperrzähne aus den Sperrausnehmungen unkontrolliert herausspringen lassen könnten, zuverlässig ausgeschlossen. Dennoch reicht die elastische Verformbarkeit des Arms in seinem die Sperrzähne tragenden mittleren Bereich aus, beim Verdrehen des Spannrings im Sinne eines Schließens des Bohrfutters die Sperrzähne rastend über den Kranz der Sperrausnehmungen hinwegrutschen zu lassen.

Selbstverständlich kann auch im Rahmen der Erfindung von der eingangs bereits erwähnten Möglichkeit einer Nachstellung des Bohrfutters durch eine Nachstellfeder Gebrauch gemacht werden, wozu es dann außer der Nachstellfeder einer begrenzt verdrehbaren Führung des Sperrings am Futterkörper bedarf, wie es in der eingangs genannten Patentanmeldung schon beschrieben ist und daher hier keiner weiteren Ausführungen mehr bedarf. Wird auf diese Nachstellmöglichkeit verzichtet, ergibt sich ein besonders einfacher Aufbau des erfindungsgemäßen Bohrfutters, weil dann die vorteilhafte Möglichkeit besteht, den Sperring verdrehungsfest am Futterkörper anzuordnen, beispielsweise ihn auf den Futterkörper aufzupressen.

Eine wegen ihrer konstruktiven Vorteile bevorzugte Ausführungsform der Erfindung ist dadurch gekennzeichnet, daß der Arm aus dem Sperring durch einen Schlitz freigeschnitten ist, der an dem dem freien Armende entsprechenden Schlitzende eine in Drehrichtung des Spannrings beim Schließen des Bohrfutters auslaufende Mündung besitzt, der gegenüber in Umfangsrichtung das am Stellring als axialer Nocken ausgebildete Stellglied angeordnet ist, so daß bei Verdrehen des Stellrings in der Drehrichtung des Spannrings beim Öffnen des Bohrfutters das Stellglied in die Schlitzmündung eintritt und sich gegen die radial innen liegende Seite des freien Armendes anlegt. Um das Eintreten des Stellglieds in den Schlitz zu erleichtern, sind zweckmäßigerweise die beim Eintreten des Stellglieds in den Schlitz aneinander zur Anlage kommenden Flächen des freien Armendes und des das Stellglied bildenden Nockens mit einander zugeordneten Anlaufschrägen versehen. Außerdem empfiehlt es sich, daß im ausgerückten Zustand des Sperrglieds die radiale Schlitzbreite geringer ist als die entsprechende Breite des das Stellglied bildenden Nockens, so daß das Stellglied beim Eintritt in die Schlitzmündung den Schlitz radial aufspreizt und dabei beidseits an den sich radial gegenüberliegenden Schlitzwänden anliegt. Der das Stellglied bildende Nocken ist dann an der radial innen liegenden Schlitzwand abgestützt und dadurch selbst von Querkräften weitgehend entlastet.

Eine weiter besonders bevorzugte Ausführungsform ist dadurch gekennzeichnet, daß der Arm in seinem die Sperrzähne tragenden Bereich einen axial gegen den Stellring vorstehenden Stellzapfen aufweist, dem am Stellring eine Stellkurve zugeordnet ist, die in im wesentlichen radialer Richtung am Stellzapfen zur Anlage kommt und in der dem ausgerückten Zustand des Sperrglieds entsprechenden Drehstellung des Stellrings den Arm gegen radial auswärts gerichtete Bewegung sichert. Die Stellkurve bewirkt im Ergebnis eine zwangsweise Rückstellung des Sperrglieds in den ausgerückten Zustand, wenn der Stellring entsprechend verdreht wird und sich dabei der das Stellglied bildende Nocken vom freien Armende löst.

Im übrigen empfiehlt es sich, die Anordnung so zu treffen, daß zwischen dem Stellring und dem Sperring eine Rastvorrichtung aus mindestens einem Rastvorsprung am einen Ring und einem zugeordneten federnden Rastglied am anderen Ring vorgesehen ist, wobei das beim Verdrehen des Stellrings über den Rastvorsprung hinweg laufende Rastglied in der dem eingerückten Zustand des Sperrglieds entsprechenden Drehstellung des Stellrings auf der einen Seite, in der dem ausgerückten Zustand entsprechenden Drehstellung auf der anderen Seite des Rastvorsprunges steht. Die Rastvorrichtung bietet den Vorteil, daß sie bei offenem Bohrfutter den Stellring in der dem ausgerückten Zustand des Sperrglieds entsprechenden Drehstellung hält, so daß das Sperrglied nicht ungewollt in den eingerückten Zustand gelangen kann, wenn bei offenem Bohrfutter der Spannring nur verstellt wird, um den Spanndurchmesser zwischen den Spannbacken zu ändern. Erst wenn das Bohrfutter an einem zwischen den Spannbacken befindlichen Bohrerschaft festgezogen wird, reicht das Drehmoment aus, den Stellring aus seiner Fixierung durch die Rastvorrichtung zu lösen und das Rastglied über den Rastvorsprung hinweglaufen zu lassen. Zweckmäßigerweise ist das Rastglied von einem aus dem Sperrglied freigeschnittenen axialen Federzapfen gebildet, gegen den der am Stellring sitzende Rastvorsprung radial nach innen vorsteht. Auch sind vorzugsweise der Rastvorsprung und das Rastglied mit in Umfangsrichtung einander zugeordneten Anlaufschrägen versehen.

Zur Bildung der die Drehung des Stellrings gegenüber dem Futterkörper begrenzenden Anschläge ist eine bevorzugte Ausführungsform dadurch gekennzeichnet, daß der Sperring radial abstehende Anschlagnocken aufweist, die je in eine Aussparung im Stellring greifen, wobei die Aussparungen sich jeweils längs eines mit der Futterachse konzentrischen Kreisbogens erstrecken und in Umfangsrichtung um den Verdrehungsweg des Stellrings großer als der jeweils in die Aussparung greifende Anschlagnocken sind, so daß die Anschläge zur Drehbegrenzung des Stellrings von den sich in Umfangsrichtung jeweils gegenüberliegenden Flächen des Anschlagnockens und der Aussparung gebildet sind.

Die Sperrausnehmungen am Spannring sind im axialen Profil vorzugsweise sägezahnförmig und die Sperrzähne entprechend als Sägezähne ausgebildet, wobei in der dem Schließen des Bohrfutters entsprechenden Drehrichtung des Spannrings die steile Zahnbrust der Sägezähne dem flacheren Zahnrücken vorangeht.

Ein konstruktiv und montagetechnisch besonders einfacher und daher bevorzugter Aufbau des Bohrfutters wird dadurch erreicht, daß der Stellring am fest mit dem Futterkörper verbundenen Sperring geführt ist, wobei der Stellring eine den Sperring an der der Bohrspindel zugekehrten Stirnseite radial von außen her übergreifende Ringschulter besitzt, an der die Aussparungen für die Anschlagnocken und die Stellkurve für den Stellzapfen des Armes ausgebildet sind, daß die Ringschulter einen axial nach vorn zum Bohrer hin vorstehenden Kragenteil trägt, der in Umfangsrichtung im Bereich einer der Aussparungen und der Stellkurve eine den Arm aufnehmende Lücke aufweist, daß sich am Kragenteil die Rastvorsprünge und der das Stellglied bildende Nocken befinden, und daß der Stellring außenseitig eine axial gegen den Spannring vorstehenden Griffhülse besitzt, die den Kranz der Sperrausnehmungen überfaßt, der in eine Ringnut zwischen dem Kragenteil und der Griffhülse vorsteht. Der Stellring und der Sperring können in einfacher Weise als Spritzguß-Kunststoffteil hergestellt werden. Bei der Montage kann der Sperring auf den Futterkörper aufgepresst werden; der Stellring braucht dann nur noch auf den Sperring aufgesteckt und an ihm gesichert zu werden.

Im folgenden wird die Erfindung an einem in der Zeichnung dargestellten Ausführungsbeispiel näher erläutert; es zeigen:
- Fig. 1: ein Bohrfutter nach der Erfindung, teils in Seitenansicht, teils im Axialschnitt längs der in Fig. 4 eingetragenen Schnittlinie I-I,
- Fig. 2: den oberen Teil der Fig. 1 in einem anderen Betriebszustand des Bohrfutters und längs der in Fig. 5 eingetragenen Schnittlinie II-II,
- Fig. 3: den oberen Teil der Fig. 1 in der in Fig. 6 eingetragenen Schnittlinie III-III,
- Fig. 4: den Schnitt IV-IV in Fig . 1,
- Fig. 5: den Schnitt V-V in Fig. 2,
- Fig. 6: den Schnitt VI-VI in Fig. 3
- Fig. 7: einen Axialschnitt nur durch den Stellring des Bohrfutters nach den Fig. 1 bis 6,

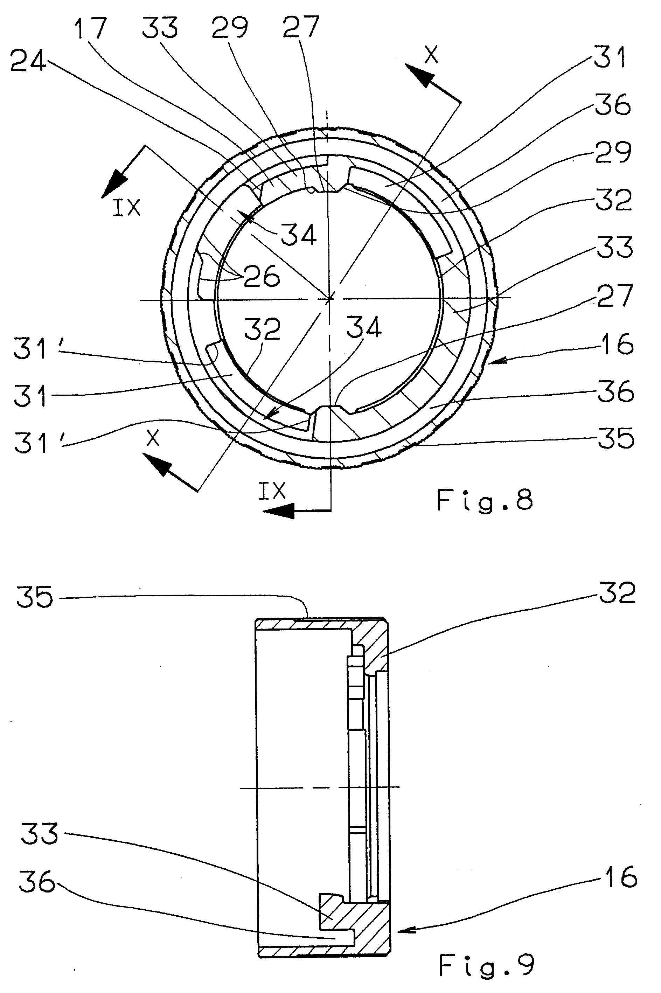

- Fig. 8: den Schnitt VIII-VIII in Fig. 7,
- Fig. 9: den Schnitt IX-IX in Fig. 8,

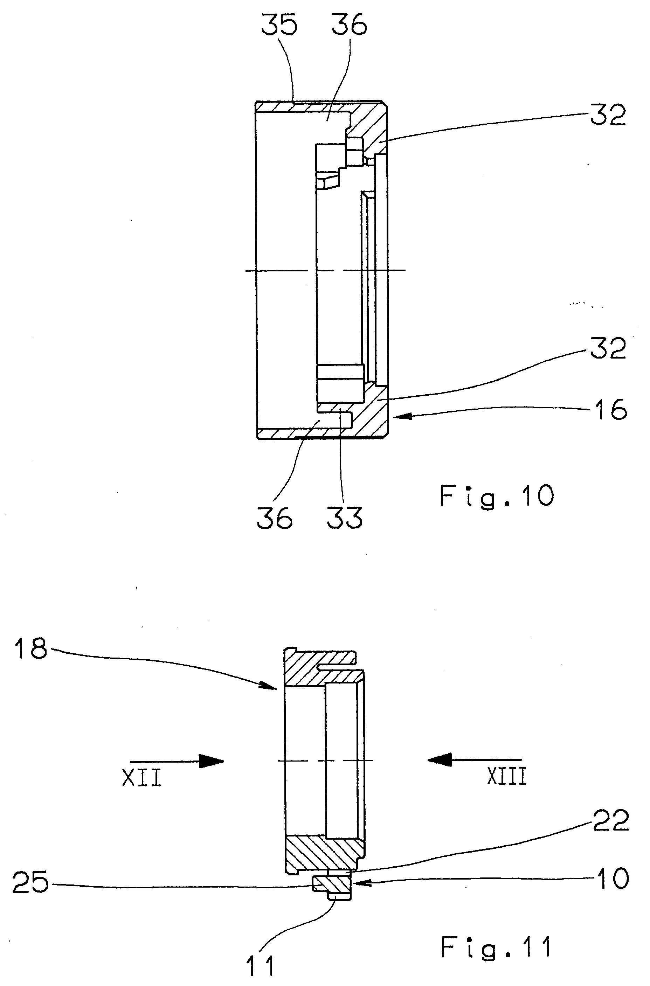

- Fig. 10: den Schnitt X-X in Fig. 8,

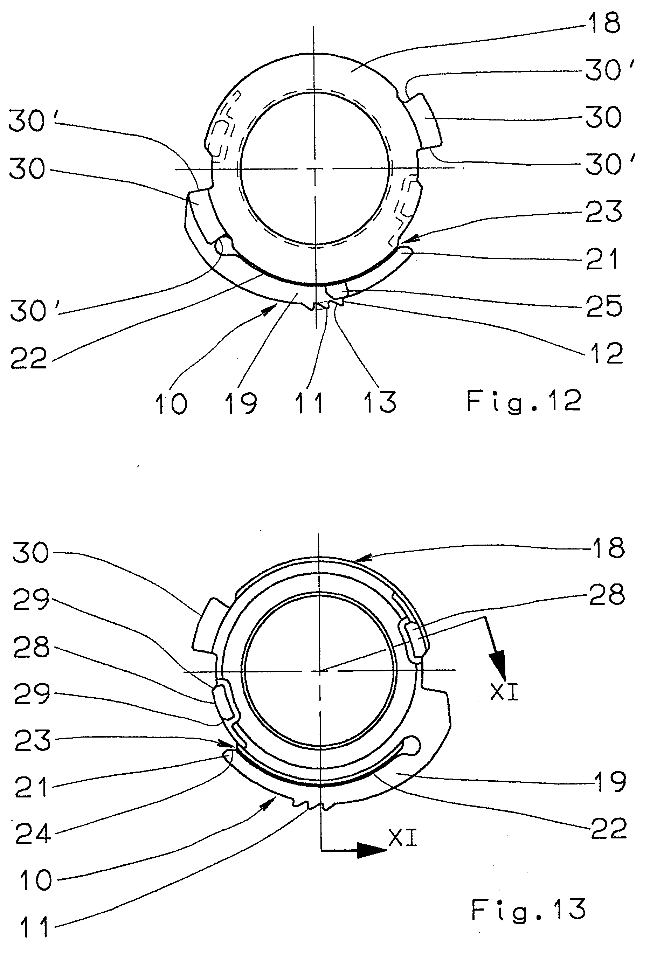

- Fig. 11: einen Axialschnitt nur durch den Sperring des Bohrfutter nach den Fig. 1 bis 6, und zwar längs der in Fig. 13 eingetragenen Schnittlinie XI-XI,
- Fig. 12: die Ansicht des Sperrings nach Fig. 11 in Richtung des Pfeil XII, und
- Fig. 13: die Ansicht des Sperrings nach Fig. 11 in Richtung des Pfeiles XIII.

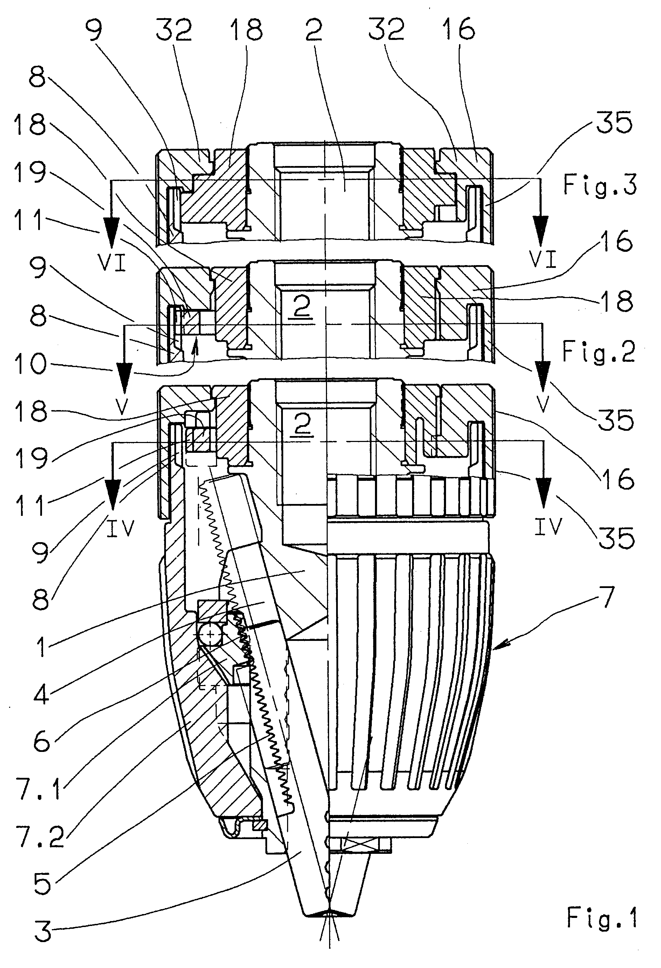

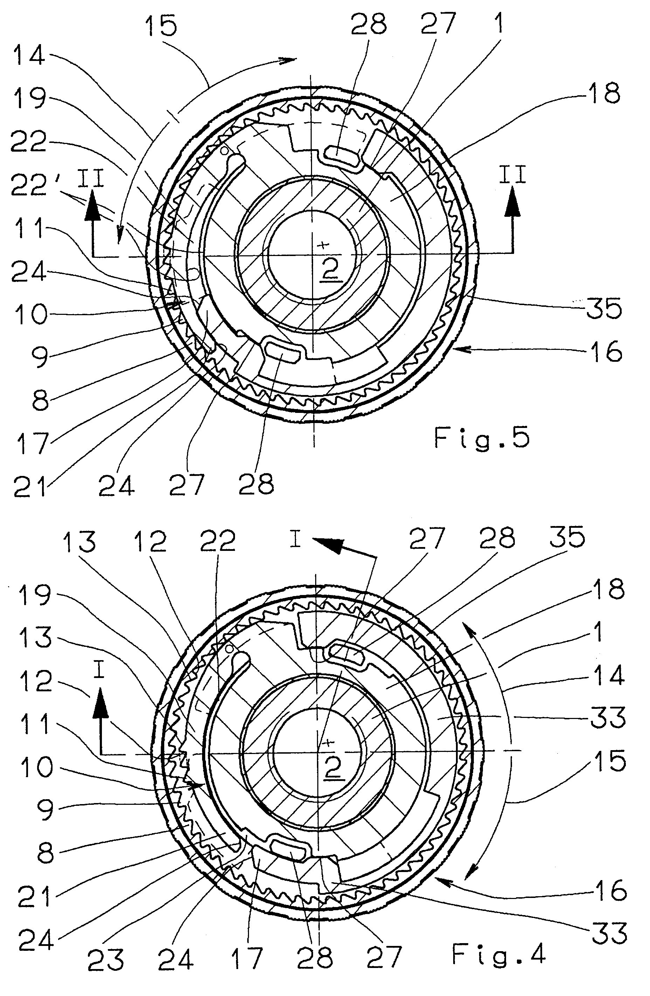

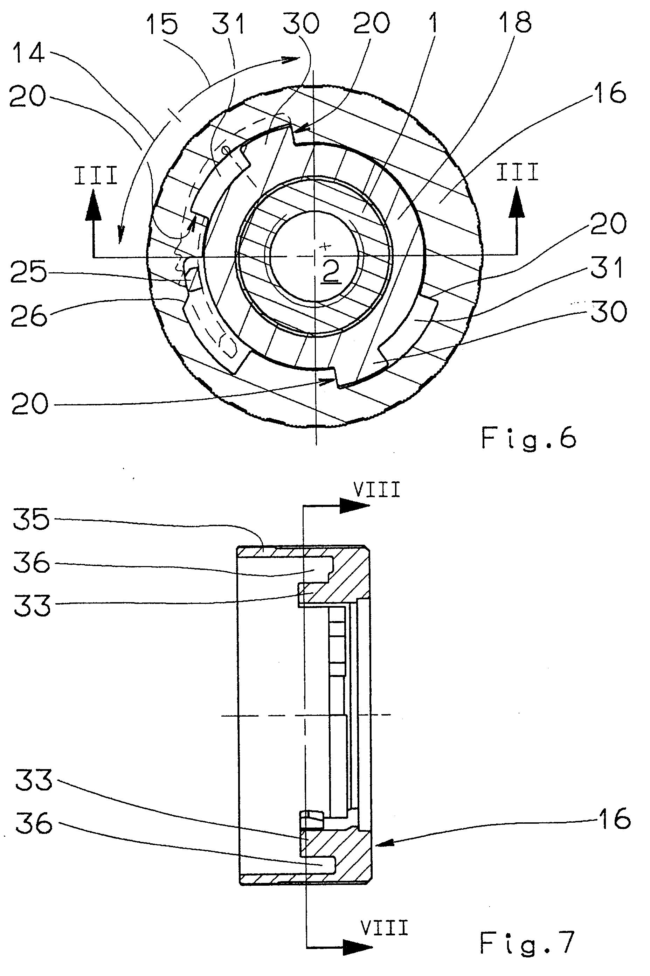

Das in der Zeichnung dargestellte Bohrfutter dient zur Aufnahme eines nicht dargestellten Bohrers und besitzt einen Futterkörper 1 zum Anschluß an eine ebenfalls nicht dargestellte Bohrspindel. Zum Anschluß dieser Bohrspindel besitzt der Futterkörper 1 eine Gewindeaufnahme 2, an die sich nach vorn ein axialer Durchgang anschließen kann, durch den hindurch die Schläge eines in der hohlen Drehspindel verschiebbar geführten Schlägers oder Döppers unmittelbar auf das Schaftende des Bohrers übertragen werden können, wenn beispielsweise das Bohrfutter speziell zum Schlagbohren dienen soll. Das Bohrfutter besitzt den Bohrer haltende Spannbacken 3, die im Futterkörper 1 in geneigt zur Futterachse verlaufenden Führungsbohrungen 4 geführt und zentrisch zu Futterachse verstellbar sind. Dazu greifen die Spannbacken 3 mit einer Verzahnung 5 in eine konische Innenverzahnung 6 eines insgesamt mit 7 bezeichneten Spannrings der zweiteilig aus einem die Innenverzahnung 6 aufweisenden Gewindering 7.1 und einer Spannhülse 7.2 aufgebaut ist, die gegeneinander unverdrehbar zusammengefügt sind. Der Spannring 7 ist am Futterkörper axial unverschiebbar und drehbar geführt und wird zum Spannen und Lösen des Futters relativ zum Futterkörper 1 von Hand verdreht. Um unerwünschte Verstellungen der Spannbacken 3 zu verhindern, kann die Drehstellung des Spannrings 7 fixiert werden. Dazu dient eine Sperreinrichtung, die aus einem koaxialen Kranz 8 von Sperrausnehmungen 9 an der inneren Umfangsfläche des Spannrings 7 und aus mindestens einem Sperrglied 10 besteht, das im wesentlichen radial von innen nach außen mit Sperrzähnen 11 in die Sperrausnehmungen 9 greift. Dabei liegen das Sperrglied 10 mit seinen Sperrzähnen 11 in die es aufnehmenden Sperrausnehmungen 9 einander in derart geneigten Flankenflächen 12, 13 an, daß diese den Spannring 7 in der dem Öffnen des Bohrfutters entsprechenden Drehrichtung (Pfeil 15) gegen Verdrehen relativ zum Futterkörper 1 verriegeln, beim Verdrehen des Spannrings 7 in der entgegengesetzten, also dem Schließen des Bohrfutters entsprechenden Drehung 14 (Pfeil 14), aber das Sperrglied 10 federnd aus den Sperrausnehmungen 9 hinausdrücken, so daß das Sperrglied 10 von Sperrausnehmung zu Sperrausnehmung entlang dem Umfang des Spannrings 7 bzw. Kranzes 8 verrutschen kann. Dazu sind die Sperrausnehmungen 9 am Spannring 7 im axialen Profil sägezahnförmig ausgebildet. Die Sperrzähne 11 sind in der Form entsprechend gestaltete Sägezähne. In der dem Schließen des Bohrfutters entsprechenden Drehrichtung (Pfeil 14) des Spannrings 7 geht die steile Zahnbrust 12 der Sägezähne dem flacheren Zahnrücken 13 voran. Am Futterkörper 1 ist weiter drehbar ein koaxialer Stellring 16 geführt, durch dessen Verdrehen in Richtung des Pfeiles 14 das Sperrglied 10 in den ausgerückten Zustand verstellbar ist, in dem es mit seinen Sperrzähnen 11 außerhalb der Sperrausnehmungen 9 steht, der Spannring 7 also frei und unbehindert durch die Sperreinrichtung relativ zum Futterkörper 1 verdreht werden kann. Diese Stellung des Sperrglieds 10 ist in den Fig. 1, 3, 4 und 6 dargestellt. Dabei besitzt der Stellring 16 ein am Sperrglied 10 angreifendes Stellglied 17, so daß durch Verdrehen des Stellrings 16 in der dem Schließen des Bohrfutters entsprechenden Drehrichtung (Pfeil 14) des Spannrings 7 das Sperrglied 10 sich aus dem an den Sperrausnehmungen 9 eingerückten Zustand in den ausgerückten Zustand, bzw. beim Verdrehen des Stellrings 16 in der entgegengesetzten Richtung (Pfeil 15) aus dem ausgerückten in den eingerückten Zustand (Fig. 2, 4) verstellt. Das Sperrglied 10 ist als ein sich in Umfangsrichtung erstreckender, mit dem einen Ende an einem Sperring 18 gehaltener federnder Arm 19 ausgebildet, der im eingerückten Zustand mit den Sperrzähnen 11 durch das Stellglied 17 in die Sperrausnehmungen 9 gedrückt wird. Die Verdrehung des Stellrings 16 relativ zum Futterkörper 1 ist in beiden Drehrichtungen formschlüssig durch Anschläge 20 begrenzt. Der Sperring 18 ist der verdrehungsfest am Futterkörper 1 angeordnet, im Ausführungsbeispiel axial auf den Futterkörper 1 aufgepresst. Im ausgerückten Zustand des Sperrglieds 10 steht das Stellglied 17 mit Abstand vor dem freien Ende 21 des Arms 19 (Fig. 4). Im eingerückten Zustand des Sperrglieds 10 dagegen liegt das Stellglied 17 am freien Ende 21 des Armes 19 an und drückt dieses gem. Fig. 5 radial gegen den Kranz 8 der Sperrausnehmungen 9, so daß im Ergebnis das freie Armende 21 zwischen dem Kranz 8 der Sperrausnehmungen 9 und dem Stellglied 17 eingespannt ist und sich radial nicht bewegen kann. Dabei ist aber der Arm 19 im mittleren Bereich zwischen dem am Sperring 18 gehaltenen Ende und dem am Stellglied 17 anliegenden Ende 21 radial nach innen soweit elastisch durchbiegbar, wie im eingerückten Zustand die Sperrzähne 11 radial auswärts in die Sperrausnehmungen 9 eingreifen. Und da nur in diesem Armbereich sich die Sperrzähne 14 befinden, ist das Verdrehen des Spannrings 7 in Richtung des Pfeils 14 auch im eingerückten Zustand des Sperrglieds 10 nach wie vor möglich.

Im einzelnen ist der Arm 19 aus dem Sperring 18 durch einen Schlitz 22 freigeschnitten. Der Schlitz 22 besitzt an dem dem freien Armende 21 entsprechenden Schlitzende eine in Drehrichtung (Pfeil 14) des Spannrings 7 beim Schließen des Futters auslaufende Mündung 23, der gegenüber in Umfangsrichtung das am Stellring 16 als axialer Nocken ausgebildete Stellglied 17 angeordnet ist, so daß bei Verdrehen des Stellrings 16 in der Drehrichtung (Pfeil 15) des Spannrings 7 beim Öffnen des Bohrfutters das Stellglied 17 in die Schlitzmündung 23 eintritt und sich gegen die radial innen liegende Seite des freien Armendes 21 anlegt. Dieser Eintritt des Stellglieds 17 in den Schlitz 22 wird dadurch erleichtert, daß die dabei aneinander zur Anlage kommenden Flächen des freien Armendes 21 einerseits und des das Stellglied 17 bildenden Nockens andererseits mit einander zugeordneten Anlaufschrägen 24 versehen sind. Im ausgerückten Zustand des Sperrglieds 10 ist die radiale Schlitzbreite jedenfalls im Bereich der Schlitzmündung 23 geringer als die entsprechende radiale Breite des das Stellglied 17 bildenden Nockens. Daher wird der Schlitz 22 beim Eintritt des Stellglieds 17 in die Schlitzmündung 23 radial aufgespreizt und der das Stellglied 17 bildende Nocken liegt beidseits an den sich radial gegenüberliegenden Schlitzwänden 22' an. In seinem die Sperrzähne 11 tragenden Bereich besitzt der Arm 19 einen axial gegen den Stellring 16 vorstehenden Stellzapfen 25, dem am Stellring 16 eine Stellkurve 26 zugeordnet ist. An dieser Stellkurve 26 kommt der Stellzapfen 25 in im wesentlichen radialer Richtung zur Anlage, wobei die Stellkurve 26 in der dem ausgerückten Zustand des Sperrglieds 10 entsprechenden Drehstellung des Stellrings 16 den Stellzapfen 25 radial nach innen drückt (Fig. 5) und dadurch den Arm 19 gegen radial auswärts gerichtetete Bewegung sichert, so daß das Sperrglied 10 nicht ungewollt in den eingerückten Zustand gelangen kann.

Zwischen 16 dem Stellring 16 und dem Sperring 18 ist eine Rastvorrichtung vorgesehen, die aus zwei am Stellring 16 diametral sich gegenüberliegenden Rastvorsprüngen 27 und zwei jeweils den Rastvorsprüngen 27 zugeordneten federnden Rastgliedern 28 am Sperring 18 besteht. Die beim Verdrehen des Stellrings 16 über die Rastvorsprünge 27 hinweglaufenden Rastglieder 28 stehen in der dem eingerückten Zustand des Sperrglieds 10 entsprechenden Drehstellung des Stellrings 7 auf der aus Fig. 5 ersichtlichen, entgegen dem Uhrzeigersinn gerichteten Seite des jeweiligen Rastvorsprungs 27, in der dem ausgerückten Zustand entsprechenden Drehstellung des Stellrings 16 dagegen auf der anderen, im Uhrzeigersinn gerichteten Seite des Rastvorsprungs 27, wie es aus Fig. 4 ersichtlich ist. Die Rastglieder 28 sind von einem aus dem Sperring 18 freigeschnittenen axialen Federzapfen gebildet, der sich quer zu seiner Axialrichtung federnd biegen kann und dadurch die für den Rastvorgang erforderliche Federkraft erzeugt. Gegen die Rastglieder 28 stehen die Rastvorsprünge 27 radial nach innen vor. Auch hier sind die Rastvorsprünge 27 und die Rastglieder 28 mit in Umfangsrichtung einander zugeordneten Anlaufschrägen 29 versehen.

Der Sperring 18 besitzt zwei radial abstehende, sich diametral gegenüberliegende Anschlagnocken 30, die je in eine Aussparung 31 im Stellring 16 greifen. Die Aussparungen 31 erstrecken sich jeweils längs eines mit der Futterachse konzentrischen Kreisbogens. Sie sind in Umfangsrichtung um den Verdrehungsweg 16 des Stellrings größer als der jeweils in die Aussparung 31 greifende Anschlagnocken 30, so daß die Anschläge 20 zur Drehbegrenzung des Stellrings 16 von den sich in Umfangsrichtung jeweils gegenüberliegenden Flächen 30', 31' des Anschlagnockens 30 einerseits und der Aussparung 31 andererseits gebildet sind.

Der Stellring 16 ist am fest mit dem Futterkörper 1 verbundenen, nämlich auf ihn aufgepressten Sperring 18 geführt. Der Stellring 16 besitzt eine den Sperring 18 an der der Bohrspindel zugekehrten Stirnseite radial von außen her übergreifende Ringschulter 32. An dieser Ringschulter 32 sind die Aussparungen 31 für die Anschlagnocken 30 und die Stellkurve 26 für den Stellzapfen 25 des Armes 19 ausgebildet. Die Ringschulter 32 trägt einen axial nach vorn zum Bohrer hin vorstehenden Kragenteil 33, der in Umfangsrichtung im Bereich einer der Aussparungen 31 und der benachbarten Stellkurve 26 eine den Arm 19 aufnehmende Lücke 34 aufweist. Am Kragenteil 33 befinden sich die Rastvorsprünge 27 und der das Stellglied 17 bildende Nocken. Außenseitig besitzt der Stellring 16 eine axial gegen den Spannring 7 vorstehende Griffhülse 35, die zwischen sich und dem Kragenteil 33 eine Ringnut 36 bildet, in die der Kranz 8 der Sperrausnehmungen 9 vorsteht.

Die Funktionsweise des erfindungsgemäßen Bohrfutters läßt sich kurz wie folgt beschreiben:

Die Fig. 1, 3, 4 und 6 zeigen das Bohrfutter im offenen Zustand, die Fig. 2 und 5 im geschlossenen Zustand. Außerdem sind in den Fig. 4 bis 6 die außerhalb der jeweiligen Schnittebene liegenden, für das Funktionsverständnis aber wichtigen Futterteile gestrichelt angedeutet. Im offenen Zustand stehen die Sperrzähne 11 des Sperrglieds 10 außer Eingriff an den Sperrausnehmungen 9, so daß sich der Spannring 7 und mit ihm der Kranz 8 der Sperrausnehmungen 9 frei relativ zum Sperring 18 und zum Futterkörper 1 in beiden Drehrichtungen verdrehen läßt. Kommen beim Verdrehen im Sinne eines Schließens des Bohrfutters (Pfeil 14) die Spannbacken 3 an einem zwischen ihnen befindlichen Bohrerschaft zur Anlage, läßt sich der Spannring 7 relativ zum Futterkörper 1 nicht mehr nennenswert weiter in Richtung des Pfeiles 14 verdrehen, so daß der Futterkörper 1 an der Drehbewegeung des Spannrings 7 teilnimmt, bis die Anschlagnocken 30 des undrehbar mit dem Futterkörper 1 verbundenen Sperrings 18 an den Anschlägen aufgehalten werden und dadurch der Futterkörper 1 am festgehaltenen Stellring 16 gegen weiteres Mitdrehen gesichert wird. Dabei verstellt sich gleichzeitig der Stellzapfen 25 längs der Stellkurve 26 in Richtung des Pfeiles 14 so daß der Stellzapfen nicht an der Stellkurve 26 anliegt und sich der Arm 19 mit dem Armende 21 radial bewegen kann. Das bei dem beschriebenen Drehvorgang am freien Armende 21 anlaufende Stellglied 17 kann daher in den Schlitz 22 eintreten und das freie Armende 21 radial nach außen gegen den Kranz 8 der Sperrausnehmungen 9 drücken, so daß die Sperrzähne 11 in die Sperrausnehmungen 9 eingreifen, wie es aus den Fig. 2 und 5 ersichtlich ist. - Im offenen Zustand des Futters gemäß den Fig. 1 und 4 hält die Rasteinrichtung 27, 28 den Stellring 16 gegen Verdrehen relativ zum Sperring 18 in Richtung des Pfeiles 15 fest, so daß der Spannring 7 bei offenem Futter in beiden Drehrichtungen, beispielsweise zum Verstellen des Spanndurchmessers, frei verdreht werden kann. Befindet sich aber zwischen den Spannbacken 3 ein Bohrerschaft, an dem die Spannbacken 3 beim Verdrehen des Spannrings 7 in Richtung des Pfeiles 14 zur Anlage kommen, muß sich der Sperring 18 in Richtung des Pfeiles 14 gegenüber dem festgehaltenen Stellring 16 verdrehen, mit dem Ergebnis, daß die Rastglieder 28 in Richtung des Pfeiles 14 über die Rastvorsprünge 27 in die in den Fig. 2 und 5 gezeigte Stellung hinwegrutschen.

## Patentansprüche

1. Bohrfutter mit einem an eine Bohrspindel anschließbaren Futterkörper (1), mit zwischen sich eine Aufnahme für das Bohrwerkzeug bildenden Spannbacken (3), die zum Öffnen und Schließen des Bohrfutters durch einen am Futterkörper (1) drehbar geführten Spannring (7) verstellbar sind, ferner mit einer Sperreinrichtung für den Spannring (7), bestehend aus einem koaxialen Kranz (8) von Sperrausnehmungen (9) am Spannring (7) und aus mindestens einem, an einem koaxialen Sperring (18) angeordneten Sperrglied (10), das im wesentlichen radial von innen nach außen in die Sperrausnehmungen (9) einrückbar ist, wobei im eingerückten Zustand das Sperrglied (10) und die Sperrausnehmungen (9) einander in derart geneigten Flankenflächen (12, 13) anliegen, daß diese den Spannring (7) in der dem Öffnen des Bohrfutters entsprechenden Drehrichtung gegen Verdrehen sperren, beim Verdrehen des Spannrings (7) in der entgegengesetzten, also dem Schließen des Bohrfutters entsprechenden Drehrichtung aber das Sperrglied (10) federnd aus den Sperrausnehmungen (9) hinausdrücken und dadurch von Sperrausnehmung zu Sperrausnehmung verrutschen lassen, und mit einem mit dem Futterkörper (1) koaxialen Stellring (16), der zwischen Anschlägen (20) relativ zum Futterkörper (1) in beiden Drehrichtungen begrenzt verdrehbar ist und ein am Sperrglied (10) angreifendes Stellglied (17) aufweist, so daß durch Verdrehen des Stellrings (16) in der dem Schließen des Bohrfutters entsprechenden Drehrichtung des Spannrings (7) das Sperrglied (10) sich aus dem eingerückten Zustand in den ausgerückten Zustand und umgekehrt verstellt, wobei das Sperrglied (10) als ein sich in Umfangsrichtung erstreckender, mit einem seiner beiden Enden am Sperring (18) gehaltener Arm (19) ausgebildet ist, der mit Sperrzähnen (11) versehen und im eingerückten Zustand durch das Stellglied (17) mit den Sperrzähnen (11) in die Sperrausnehmungen (9) gedrückt ist, dadurch gekennzeichnet, daß das Stellglied (17) im eingerückten Zustand des Sperrglieds (10) am freien Ende (21) des Arms (19) anliegt und dieses radial gegen den Kranz (8) der Sperrausnehmungen (9) drückt, daß ferner der Arm (19) im mittleren Bereich zwischen dem am Sperring (18) gehaltenen Ende und dem am Stellglied (17) anliegenden Ende (21) radial nach innen soweit elastisch durchbiegbar ist, wie im eingerückten Zustand die Sperrzähne (11) radial auswärts in die Sperrausnehmungen (9) eingreifen, und daß sich die Sperrzähne (11) nur in diesem mittleren Bereich des Armes (19) befinden.

2. Bohrfutter nach Anspruch 1, dadurch gekennzeichnet, daß der Sperring (18) verdrehungsfest am Futterkörper (1) angeordnet ist.

3. Bohrfutter nach Anspruch 1 oder 2, dadurch gekennzeichnet, daß der Arm (19) aus dem Sperring (18) durch einen Schlitz (22) freigeschnitten ist, der an dem dem freien Armende (21) entsprechenden Schlitzende eine in Drehrichtung des Spannrings (7) beim Schließen des Bohrfutters auslaufende Mündung (23) besitzt, der gegenüber in Umfangsrichtung das am Stellring (16) als axialer Nocken ausgebildete Stellglied (17) angeordnet ist, so daß bei Verdrehen des Stellrings (16) in der Drehrichtung des Spannrings (7) beim Öffnen des Bohrfutters das Stellglied (17) in die Schlitzmündung (23) eintritt und sich gegen die radial innen liegende Seite des freien Armendes (21) anlegt.

4. Bohrfutter nach Anspruch 3, dadurch gekennzeichnet, daß die beim Eintreten des Stellglieds (17) in den Schlitz (22) aneinander zur Anlage kommenden Flächen des freien Armendes (21) und des das Stellglied (17) bildenden Nockens mit einander zugeordneten Anlaufschrägen (24) versehen sind.

5. Bohrfutter nach Anspruch 3 oder 4, dadurch gekennzeichnet, daß im ausgerückten Zustand des Sperrglieds (10) die radiale Schlitzbreite geringer ist als die entsprechende Breite des das Stellglied (17) bildenden Nockens, so daß das Stellglied (17) beim Eintritt in die Schlitzmündung (23) den Schlitz (22) radial aufspreizt und dabei beidseits an den sich radial gegenüberliegenden Schlitzwänden (22') anliegt.

6. Bohrfutter nach einem der Ansprüche 1 bis 5, dadurch gekennzeichnet, daß der Arm (19) in seinem die Sperrzähne (11) tragenden Bereich einen axial gegen den Stellring (16) vorstehenden Stellzapfen (25) aufweist, dem am Stellring (16) eine Stellkurve (26) zugeordnet ist, die in im wesentlichen radialer Richtung am Stellzapfen (25) zur Anlage kommt und in der dem ausgerückten Zustand des Sperrglieds (10) entsprechenden Drehstellung des Stellrings (16) den Arm (19) gegen radial auswärts gerichtete Bewegung sichert.

7. Bohrfutter nach einem der Ansprüche 1 bis 6, dadurch gekennzeichnet, daß zwischen dem Stellring (16) und dem Sperring (18) eine Rastvorrichtung aus mindestens einem Rastvorsprung (27) am einen Ring und einem zugeordneten federnden Rastglied (28) am anderen Ring vorgesehen ist, wobei das beim Verdrehen des Stellrings (16) über den Rastvorsprung (27) hinweg laufende Rastglied (28) in der dem eingerückten Zustand des Sperrglieds (10) entsprechenden Drehstellung des Stellrings (16) auf der einen Seite, in der dem ausgerückten Zustand entsprechenden Drehstellung auf der anderen Seite des Rastvorsprunges (27) steht.

8. Bohrfutter nach Anspruch 7, dadurch gekennzeichnet, daß das Rastglied (28) von einem aus dem Sperring (18) freigeschnittenen axialen Federzapfen gebildet ist, gegen den der am Stellring (16) sitzende Rastvorsprung (27) radial nach innen vorsteht.

9. Bohrfutter nach Anspruch 8, dadurch gekennzeichnet, daß der Rastvorsprung (27) und das Rastglied (28) mit in Umfangsrichtung einander zugeordneten Anlaufschrägen (29) versehen sind.

10. Bohrfutter nach einem der Ansprüche 1 bis 9, dadurch gekennzeichnet, daß der Sperring (18) radial abstehende Anschlagnocken (30) aufweist, die je in eine Aussparung (31) im Stellring (16) greifen, wobei die Aussparungen (31) sich jeweils längs eines mit der Futterachse konzentrischen Kreisbogens erstrecken und in Umfangsrichtung um den Verdrehungsweg des Stellrings (16) größer als der jeweils in die Aussparung (31) greifende Anschlagnocken (30) sind, so daß die Anschläge (20) zur Drehbegrenzung des Stellrings (16) von den sich in Umfangsrichtung jeweils gegenüberliegenden Flächen (30', 31-) des Anschlagnockens (30) und der Aussparung (31) gebildet sind.

11. Bohrfutter nach einem der Ansprüche 1 bis 10, dadurch gekennzeichnet, daß die Sperrausnehmungen (9) am Spannring (7) im axialen Profil sägezahnförmig ausgebildet sind, in die die entsprechend als Sägezähne ausgebildeten Sperrzähne (11) eingreifen, wobei in der dem Schließen des Bohrfutters entsprechenden Drehrichtung des Spannrings (7) die steile Zahnbrust (12) der Sägezähne dem flacheren Zahnrücken (13) vorangeht.

12. Bohrfutter nach den Ansprüchen 1 bis 11, dadurch gekennzeichnet, daß der Stellring (16) am fest mit dem Futterkörper (1) verbundenen Sperring (18) geführt ist, wobei der Stellring (16) eine den Sperring (18) an der der Bohrspindel zugekehrten Stirnseite radial von außen her übergreifende Ringschulter (32) besitzt, an der die Aussparungen (31) für die Anschlagnocken (30) und die Stellkurve (26) für den Stellzapfen (25) des Armes (19) ausgebildet sind, daß die Ringschulter (32) einen axial nach vorn zum Bohrer hin vorstehenden Kragenteil (33) trägt, der in Umfangsrichtung im Bereich einer der Aussparungen (31) und der Stellkurve (26) eine den Arm (19) aufnehmende Lücke (34) aufweist, daß sich am Kragenteil (33) die Rastvorsprünge (27) und der das Stellglied (17) bildende Nocken befinden, und daß der Stellring (16) außenseitig eine axial gegen den Spannring (7) vorstehenden Griffhülse (35) besitzt, die den Kranz (8) der Sperrausnehmungen (9) überfaßt, der in eine Ringnut (36) zwischen dem Kragenteil (33) und der Griffhülse (35) vorsteht.

## Claims

1. A drilling chuck comprising a chuck body (1) which can be connected to a drilling spindle, clamping jaws (3) which form between them a receiving means for the drilling tool and which for opening and closing of the drilling chuck are displaceable by a clamping ring (7) guided rotatably on the chuck body (1), a locking means for the clamping ring (7), comprising a coaxial ring (8) of locking recesses (9) on the clamping ring (7) and at least one locking member (10) which is arranged on a coaxial locking ring (18) and which can be engaged substantially radially from the inside outwardly into the locking recesses (9), wherein in the engaged condition the locking member (10) and the locking recesses (9) bear against each other at flank surfaces (12, 13) which are inclined in such a way that they lock the locking ring (7) to prevent rotary movement in the direction of rotation corresponding to opening of the drilling chuck but upon rotation of the locking ring (7) in the opposite direction of rotation which therefore corresponds to closing of the drilling chuck the flank surfaces resiliently urge the locking member (10) out of the locking recesses (9) and thereby allow the locking member to slip from one locking recess to another, and further comprising a setting ring (16) which is coaxial with the chuck body (1) and which is limitedly rotatable between abutments (20) relative to the chuck body (1) in both directions of rotation and has a setting member (17) which engages the locking member (10) so that rotation of the setting ring (16) in the direction of rotation of the clamping ring (7) corresponding to closing of the drilling chuck causes displacement of the locking member (10) out of the engaged condition into the disengaged condition and vice-versa, wherein the locking member (10) is in the form of a peripherally extending arm (19) which is held with one of its two ends on the locking ring (18) and which is provided with locking teeth (11) and which in the engaged condition is urged by the setting member (17) with the locking teeth (11) into the locking recesses (9), characterised in that in the engaged condition of the locking member (10) the setting member (17) bears against the free end (21) of the arm (19) and urges it radially against the ring (8) of locking recesses (9), that in addition the arm (19) can be radially inwardly elastically flexed in the central region between the end held to the locking ring (18) and the end (21) bearing against the setting member (17), to such an extent that in the engaged condition the locking teeth (11) engage radially outwardly into the locking recesses (9), and that the locking teeth (11) are disposed only in said central region of the arm (19).

2. A drilling chuck according to claim 1 characterised in that the locking ring (18) is non-rotatably arranged on the chuck body (1).

3. A drilling chuck according to claim 1 or claim 2 characterised in that the arm (19) is cut free from the locking ring (18) by a slot (22) which at the slot end corresponding to the free arm end (21), has a mouth (23) which opens in the direction of rotation of the clamping ring (7) upon closing of the drilling chuck and opposite which in the peripheral direction is arranged the setting member (17) which is formed on the setting ring (16) as an axial projection so that upon rotation of the setting ring (16) in the direction of rotation of the clamping ring (7) upon opening of the drilling chuck the setting member (17) passes into the slot mouth (23) and bears against the radially inwardly disposed side of the free end (21) of the arm.

4. A drilling chuck according to claim 3 characterised in that the surfaces of the free end (21) of the arm and of the projection forming the setting member (17), which surfaces come to bear against each other when the setting member (17) passes into the slot (22), are provided with inclined run-on surface portions (24) associated with each other.

5. A drilling chuck according to claim 3 or claim 4 characterised in that in the disengaged condition of the locking member (10) the radial slot width is less than the corresponding width of the projection forming the setting member (17) so that on passing into the slot mouth (23) the setting member (17) radially spreads open the slot (22) and in so doing bears at both sides against the radially oppositely disposed walls (22') of the slot.

6. A drilling chuck according to one of claims 1 to 5 characterised in that in its region carrying the locking teeth (11) the arm (19) has a setting projection portion (25) which projects axially towards the setting ring (16) and with which there is associated on the setting ring (16) a setting cam (26) which comes to bear against the setting projection portion (25) in a substantially radial direction and in the rotational position of the setting ring (16) corresponding to the disengaged condition of the locking member (10) secures the arm (19) to prevent radially outwardly directed movement.

7. A drilling chuck according to one of claims 1 to 6 characterised in that provided between the setting ring (16) and the locking ring (18) is a retaining means comprising at least one retaining projection (27) on the one ring and an associated resilient retaining member (28) on the other ring, wherein the retaining member (28) which upon rotary movement of the setting ring (16) runs over the retaining projection (27) is disposed on one side of the retaining projection (27) in the rotational position of the setting ring (16) corresponding to the engaged condition of the locking member (10) and it is on the other side of the retaining projection (27) in the rotational position corresponding to the disengaged condition.

8. A drilling chuck according to claim 7 characterised in that the retaining member (28) is formed by an axial spring projection portion which is cut free from the locking ring (18) and towards which the retaining projection (27) carried on the setting ring (16) radially inwardly projects.

9. A drilling chuck according to claim 8 characterised in that the retaining projection (27) and the retaining member (28) are provided with inclined run-on surface portions (29) which are associated with each other in the peripheral direction.

10. A drilling chuck according to one of claims 1 to 9 characterised in that the locking ring (18) has radially projecting abutment projections (30) which each engage into a respective recess (31) in the setting ring (16), wherein the recesses (31) each extend along a circular arc which is concentric with the chuck axis and are larger in the peripheral direction by the rotational travel of the setting ring (16) than the respective abutment projections (30) engaging into the respective recess (31) so that the abutments (20) for limiting the rotary movement of the setting ring (16) are formed by the surfaces (30', 31') of the abutment projection (30) and the recess (31), which surfaces respectively bear against each other in the peripheral direction.

11. A drilling chuck according to one of claims 1 to 10 characterised in that the locking recesses (9) on the clamping ring (7) are of a sawtooth shape in axial profile, into which engage the locking teeth (11) which are correspondingly in the form of saw teeth, wherein the steep tooth face (12) of the saw teeth leads the shallower tooth back (13) in the direction of rotation of the clamping ring (7) corresponding to closing of the drilling chuck.

12. A drilling chuck according to claims 1 to 11 characterised in that the setting ring (16) is guided on the locking ring (18) which is fixedly connected to the chuck body (1), wherein the setting ring (16) has an annular shoulder (32) which engages radially from the outside over the locking ring (18) at the face towards the drilling spindle and on which the recesses (31) for the abutment projections (30) and the setting cam (26) for the setting projection portion (25) of the arm (19) are provided, that the annular shoulder (32) carries a collar portion (33) which projects axially forwardly towards the drill and which has in the peripheral direction in the region of one of the recesses (31) and the setting cam (26) a gap (34) which accommodates the arm (19), that the collar portion (33) has the retaining projections (27) and the projection forming the setting member (17), and that on the outside the setting ring (16) has a gripping sleeve (35) which projects axially towards the clamping ring (7) and which engages over the ring (8) of locking recesses (9), which projects into an annular groove (36) between the collar portion (33) and the gripping sleeve (35).

## Revendications

1. Mandrin de perçage comportant un corps (1) pouvant être raccordé à une broche de perçage, des mors de serrage (3) définissant entre eux un logement pour l'outil de perçage et qui sont réglables pour l'ouverture et la fermeture du mandrin de perçage au moyen d'une bague de serrage (7) guidée de manière à pouvoir tourner sur le corps (1) du mandrin, et comportant en outre un dispositif de blocage pour la bague de serrage (7), constitué par une couronne coaxiale (8) d'évidements de blocage (9) aménagés dans la bague de serrage (7) et par au moins un organe de blocage (10) disposé sur une bague coaxiale de blocage (18) et qui peut être engagé essentiellement radialement de l'intérieur vers l'extérieur dans les évidements de blocage (9), et dans lequel, à l'état engagé, l'organe de blocage (10) et les évidements de blocage (9) s'appliquent entre eux au niveau des surfaces de flancs (12,13), inclinées de telle sorte que ces surfaces bloquent la bague de serrage (7) contre toute rotation dans le sens de rotation correspondant à l'ouverture du mandrin de perçage, mais, lors de la rotation de la bague de serrage (7) dans le sens de rotation opposé, c'est-à-dire qui correspond à la fermeture du mandrin de perçage, repoussent élastiquement l'organe de blocage (10) hors des évidements de blocage (9) et de ce fait lui permettent de glisser d'un évidement de blocage à un autre, et comportant une bague de réglage (16) coaxiale au corps (1) du mandrin et qui peut tourner d'une manière limitée dans les deux sens de rotation entre des butées (20) par rapport au corps (1) du mandrin et comporte un organe de réglage (17), qui attaque l'organe de blocage (10) de telle sorte que sous l'effet d'une rotation de la bague de réglage (16) dans le sens de rotation de la bague de serrage (7) qui correspond à la fermeture du mandrin de perçage, l'organe de blocage (10) est déplacé de l'état engagé à l'état dégagé et inversement, l'organe de blocage (10) étant agencé sous la forme d'un bras (19) qui s'étend dans la direction circonférentielle et est retenu par l'une de ses deux extrémités sur la bague de blocage (18) et est pourvu de dents de blocage (11) et, à l'état engagé, est repoussé par l'organe de réglage (17) par les dents de blocage (11) dans les évidements de blocage (9), caractérisé en ce que, lorsque l'organe de blocage (10) est à l'état engagé, l'organe de réglage (17) s'applique sur l'extrémité libre (21) du bras (19) et repousse ce dernier radialement contre la couronne (8) des évidements de blocage (9), qu'en outre le bras (19) peut fléchir élastiquement, radialement vers l'intérieur, dans la zone centrale située entre l'extrémité retenue sur la bague de blocage (18) et l'extrémité (21), appliquée sur l'organe de réglage (17), au point qu'à l'état engagé, les dents de blocage (11) s'engagent radialement vers l'extérieur dans les évidements de blocage (9) et que les dents de blocage (11) sont situées uniquement dans cette partie centrale du bras (19).

2. Mandrin de perçage selon la revendication 1, caractérisé en ce que la bague de blocage (18) est disposée d'une manière bloquée en rotation sur le corps (1) du mandrin.

3. Mandrin de perçage selon la revendication 1 ou 2, caractérisé en ce que le bras (19) est formé par découpage à partir de la bague de blocage (18) moyennant la présence d'une fente (22) qui possède, au niveau de son extrémité correspondant à l'extrémité libre (21) du bras, une embouchure (23) qui s'ouvre dans le sens de rotation de la bague de serrage (7) lors de la fermeture du mandrin de perçage et en vis-à-vis de laquelle est disposé, dans la direction circonférentielle, l'organe de réglage (17) formé sur la bague de réglage (16) sous la forme d'une came axiale, de sorte que lors de la rotation de la bague de réglage (16) dans le sens de rotation de la bague de serrage (7) lors de l'ouverture du mandrin de perçage, l'organe de réglage (17) pénètre dans l'embouchure (23) de la fente et s'applique contre le côté, tourné radialement vers l'intérieur, de l'extrémité libre (21) du bras.

4. Mandrin de perçage selon la revendication 3, caractérisé en ce que les surfaces, qui viennent s'appliquer l'une contre l'autre lorsque l'organe de réglage (17) pénètre dans la fente (22), de l'extrémité libre (21) du bras et de la came formant l'organe de réglage (17) sont pourvues de rampes de montée (24) qui sont réciproquement associées.

5. Mandrin de perçage selon la revendication 3 ou 4, caractérisé en ce que lorsque l'organe de réglage (10) est à l'état dégagé, la largeur radiale de la fente est inférieure à la largeur correspondante de la came formant l'organe de réglage (17), de sorte que, lorsqu'il pénètre dans l'embouchure (23) de la fente, l'organe de réglage (17) élargit radialement la fente (22) et s'applique alors des deux côtés contre les parois (22') de la fente, qui sont radialement en vis-à-vis.

6. Mandrin de perçage selon l'une des revendications 1 à 5, caractérisé en ce que le bras (19) porte, dans sa partie portant les dents de blocage (11), un téton de réglage (25), qui fait saillie axialement vers la bague de réglage (16) et auquel est associée, sur la bague de réglage (16), une came de réglage (26), qui vient s'appliquer dans une direction essentiellement radiale contre le téton de réglage (25) et, lorsque la bague de réglage (16) est dans sa position en rotation qui correspond à l'état dégagé de l'organe de réglage (10), bloque le bras (19) contre un déplacement dirigé radialement vers l'extérieur.

7. Mandrin de perçage selon l'une des revendications 1 à 6, caractérisé en ce qu'entre la bague de réglage (16) et la bague de blocage (18) est prévu un dispositif d'encliquetage, constitué par au moins un appendice saillant d'encliquetage (27) situé sur une bague et un organe d'encliquetage élastique associé (28) situé sur l'autre bague, auquel cas, lorsque la bague de réglage (16) est dans sa position de rotation qui correspond à l'état engagé de l'organe de blocage (10), l'organe d'encliquetage (28), qui lors de la rotation de l'organe de réglage (16) passe au-dessus de l'appendice saillant d'encliquetage (27), est situé d'un côté de l'appendice saillant d'encliquetage (27), alors que lorsque l'organe de réglage est dans la position de rotation correspondant à l'état dégagé, l'organe d'encliquetage est situé de l'autre côté de l'appendice saillant d'encliquetage (27).

8. Mandrin de perçage selon la revendication 7, caractérisé en ce que l'organe d'encliquetage (28) est formé par un téton élastique axial, formé par découpage a partir de la bague de blocage (18) et en direction duquel l'appendice saillant d'encliquetage (27), qui s'appuie sur la bague de réglage (16), fait saillie radialement vers l'intérieur.

9. Mandrin de perçage selon la revendication 8, caractérisé en ce que l'appendice saillant d'encliquetage (27) et l'organe d'encliquetage (28) comportent des rampes de montée (29) qui sont associées réciproquement dans la direction circonférentielle.

10. Mandrin de perçage selon l'une des revendications 1 à 9, caractérisé en ce que la bague de blocage (18) possède des ergots de butée (30), qui font saillie radialement et s'engagent respectivement dans un évidement (31) aménagé dans la bague de réglage (16), les évidements (31) s'étendant respectivement le long d'un arc de cercle concentrique à l'axe du mandrin et ayant une étendue dans la direction circonférentielle qui est supérieure, et ce de la course de rotation de la bague de réglage (16), à l'étendue de l'ergot de butée (30) qui s'engage respectivement dans l'évidement (31) de sorte que les butées (20) servant à limiter la rotation de la bague de réglage (16) sont formées par les surfaces (30', 31-), réciproquement en vis-à-vis dans la direction circonférentielle, de la came de butée (30) et de l'évidement (31).

11. Mandrin de perçage selon l'une des revendications 1 à 10, caractérisé en ce que les évidements de blocage (9) aménagés dans la bague de serrage (7) sont agences avec un profil axial en dents de scie, évidements dans lesquels s'engagent les dents de blocage (11) agencées de façon correspondante sous une forme en dents de scie, auquel cas la face d'attaque pentue (12) des dents de scie précède le sommet plus plat (13) des dents dans le sens de rotation de la bague de serrage (7) qui correspond à la fermeture du mandrin de perçage.

12. Mandrin de perçage selon les revendications 1 à 11, caractérisé en ce que la bague de réglage (16) est guidée sur la bague de blocage (18) reliée de façon fixe au corps (1) du mandrin, auquel cas la bague de réglage (16) possède un épaulement annulaire (32), qui s'engage radialement à partir de l'extérieur par-dessus la bague de blocage (18), sur le côté frontal tourné vers la broche de perçage, et dans lequel sont formés les évidements (31) pour les ergots de butée (30) et la came de réglage (26) pour le téton de réglage (25) du bras (19), que l'épaulement annulaire (32) porte un élément en forme de collet (33) qui fait saillie axialement vers l'avant en direction du foret et qui, dans le sens de rotation, comporte, dans la zone au niveau de l'un des évidements (31) et de la came de commande (26), un évidement (34) logeant le bras (19), que les appendices saillants d'encliquetage (27) et les cames formant l'organe de réglage (17) sont situés sur la partie formant collet (33), et que la bague de réglage (16) possède, sur le côté extérieur, une douille de préhension (35), qui fait saillie axialement en direction de la bague de serrage (7) et qui déborde au-dessus de la couronne (8) des évidements de blocage (9), qui fait saillie dans une gorge annulaire (36) formée entre l'élément formant collet (33) et la douille de préhension (35).
